# EUROPÄISCHE PATENTSCHRIFT

(11) **EP 2 679 297 B1**
(45) Veröffentlichungstag und Bekanntmachung des Hinweises auf die Patenterteilung: **12.10.2016**
(21) Anmeldenummer: 13174292.6
(22) Anmeldetag: 28.06.2013
(51) Int. Cl.: B01D 53/22, B01D 61/58, C10L 3/00

(54) **Vorrichtung und Verfahren zur Regelung der Konzentration an Produktgas in einem Offgas**
Device and method for controlling the concentration of product gas in an offgas
Dispositif et procédé de régulation de la concentration de gaz de produit dans un gaz de rejet

(30) Priorität: 29.06.2012 AT 502562012
(43) Veröffentlichungstag der Anmeldung: 01.01.2014
(73) Patentinhaber: Axiom Angewandte Prozeßtechnik Ges. m.b.H., 2443 Ebreichsdorf (AT)
(72) Erfinder: SZIVACZ, Johannes, 2484 Weigelsdorf (AT)
(74) Vertreter: Sonn & Partner Patentanwälte

(56) Entgegenhaltungen:
- AT-A4- 507 891
- US-A- 5 556 449
- JIANGUO X ET AL: "Gas separation membrane cascades I. One-compressor cascades with minimal exergy losses due to mixing", JOURNAL OF MEMBRANE SCIENCE, ELSEVIER SCIENTIFIC PUBL.COMPANY. AMSTERDAM, NL, Bd. 112, Nr. 2, 17. April 1996 (1996-04-17), Seiten 115-128, XP004041672, ISSN: 0376-7388, DOI: 10.1016/0376-7388(95)00272-3

## Beschreibung

Die vorliegende Erfindung betrifft eine Vorrichtung und ein Verfahren zur Regelung der Konzentration an Produktgas in einem Offgas bei Auftrennung eines Gasgemisches in Produktgas und Offgas mittels Gaspermeation.

Bei Gaspermeationsmembraneinheiten erfolgt die weitgehende Trennung von Produktgas (bzw. einem an erwünschtem Produktgas reichen Gasgemisch) und Offgas (bzw. einem an unerwünschtem Abgas reichen Gasgemisch) mittels Permeation, wobei beispielsweise ein Produktgas-angereichertes Retentat und ein Abgas-angereichertes Permeat gewonnen werden können.

Wenn im Folgenden die Ausdrücke Produktgas und Offgas verwendet werden, so sind darunter immer auch an einem erwünschten Produktgas reiche Gasgemische bzw. an einem unerwünschten Abgas reiche Gasgemische zu verstehen.

Die Konzentrationen an Produktgas im Retentat und Offgas im Permeat sind von den jeweils angewendeten Prozess-Parametern abhängig, generell ist für eine erhöhte Produktgas-Konzentration immer ein erhöhter Energieeinsatz erforderlich (höherer Druck, niedrigere Ausbeute in Bezug auf eingesetztes Feedgas, etc.). Andererseits ist es beispielsweise in Biogasanlagen wünschenswert, dass das Offgas verbrannt werden kann, wozu normalerweise die Zumischung von wertvollem Produktgas (beispielsweise Methan), Feedgas oder einem anderen Brennstoff bzw. -gas zum Offgas erforderlich ist bzw. wird das abgashältige Offgas mittels einer Stützflamme verbrannt.

Vorrichtungen zur Auftrennung eines Gasgemisches in Produktgas und Offgas mittels Gaspermeation sind generell derart aufgebaut, dass das druckbeaufschlagte Feedgas in einer Membraneinheit in das Retentat und in das Permeat aufgetrennt werden, wobei beispielsweise das Retentat das Produktgas und das Permeat das Offgas enthält. Nachteil dieser einstufigen Lösung sind niedrige Produktgaskonzentration und niedrige Produktgasausbeute, die mit einem erhöhten Energiebedarf verbunden ist. Weiters ist diese Vorrichtung nur für sehr selektive Membranen wirtschaftlich einsetzbar.

Verbesserte Vorrichtungen zur Auftrennung eines Gasgemisches in Produktgas und Offgas mittels Gaspermeation sind derart aufgebaut, dass das Permeat einer ersten Membraneinheit druckbeaufschlagt als Feedgas für eine zweite Membraneinheit verwendet wird, wobei die Retentatströme der beiden Membraneinheiten das Produktgas und der Permeatstrom der zweiten Membraneinheit das Offgas enthalten. Der Anlage kann gegebenenfalls noch ein Verdichter vorgeschaltet werden, wenn das Feedgas nicht druckbeaufschlagt vorhanden ist. Der Vorteil dieser Vorrichtung ist eine verbesserte Produktgasausbeute. Nachteil dieser Lösung sind die weiterhin niedrige Produktgasqualität und ein aufgrund der erforderlichen Verdichtung des Gases für die zweite Membraneinheit erhöhter Energiebedarf. Weiters ist diese Vorrichtung nur für sehr selektive Membranen wirtschaftlich einsetzbar.

Weiters sind Vorrichtungen bekannt, wobei das Retentat einer ersten Membraneinheit als Feedgas einer zweiten Membraneinheit verwendet wird, das Permeat der zweiten Membraneinheit dem druckbeaufschlagten Feedgas der ersten Membraneinheit beigemischt wird, das Retentat der zweiten Membraneinheit als Produktgas und das Permeat der ersten Membraneinheit als Offgas abgezogen wird.

Jianguo X et al., "Gas separation membrane cascades 1. Onecompressor cascades with minimal exergy losses due to mixing", Journal Of Membrane Science, Elsevier Scientific Publ.Company, Amsterdam, NL, Bd. 112, Nr. 2, 17. April 1996, Seiten 115-128, offenbart in Figur 10 eine Vorrichtung mit mindestens zwei Membraneinheiten (S1) und (S2) und einem der ersten Membraneinheit vorgeschalteten Verdichter, welche Membraneinheiten einen Gaseingang, einen Retentatausgang und Permeatausgänge aufweisen, wobei der Retentatausgang der ersten Membraneinheit mit dem Gaseingang der zweiten Membraneinheit, der Permeatausgang der zweiten Membraneinheit ansaugseitig mit dem Verdichter bzw. der in den Verdichter führenden Gaszufuhr und der Verdichter mit dem Gaseingang der ersten Membraneinheit leitungsmäßig verbunden ist, Produktgas (Non-permeate 52) über den Retentatausgang der zweiten Membraneinheit und Offgas (permeate S1) über den Permeatausgang der ersten Membraneinheit erhalten wird, dadurch gekennzeichnet, dass der Permeatausgang der ersten Membraneinheit mit der Leitung zwischen Permeatausgang der zweiten Membraneinheit und dem Verdichter bzw. der in den Verdichter führenden Gaszufuhr leitungsmäßig verbunden ist.

Die Aufgabe der vorliegenden Erfindung besteht darin, eine Vorrichtung und ein Verfahren bei der Gaspermeation zur Verfügung zu stellen, bei welchem die Konzentration an Produktgas in einem Offgas geregelt werden kann.

Die Erfindung geht dabei von einer Vorrichtung zur Regelung der Konzentration an Produktgas in einem Offgas bei Auftrennung eines Gasgemisches in Produktgas und Offgas mittels Gaspermeation mit mindestens zwei Membraneinheiten (1) und (2) und einem der ersten Membraneinheit (1) vorgeschalteten Verdichter (3) aus, welche Membraneinheiten (1) und (2) einen Gaseingang (1a, 2a), einen Retentatausgang (1b, 2b) und Permeatausgänge (1c, 1d und 2c) aufweisen, wobei der Retentatausgang (1b) der ersten Membraneinheit (1) mit dem Gaseingang (2a) der zweiten Membraneinheit (2), der Permeatausgang (2c) der zweiten Membraneinheit (2) ansaugseitig mit dem Verdichter (3) bzw. der in den Verdichter führenden Gaszufuhr und der Verdichter (3) mit dem Gaseingang (1a) der ersten Membraneinheit (1) leitungsmäßig verbunden ist, Produktgas über Retentatausgang (2b) und Offgas über Permeatausgang (1c) erhalten wird, wobei der Permeatausgang (1d) der ersten Membraneinheit (1) mit der Leitung zwischen Permeatausgang (2c) der zweiten Membraneinheit (2) und dem Verdichter (3) bzw. der in den Verdichter führenden Gaszufuhr leitungsmäßig verbunden ist und der Verdichter (3), welcher der ersten Membraneinheit (1) vorgeschaltet ist, hinsichtlich seiner Drehzahl regelbar ist.

Die Konzentration des aus den Permeatausgang (1c) austretenden Offgases hängt dabei von der Drehzahl des Verdichters (3) ab, bei Erhöhung der Drehzahl wird über (1d) und (2c) mehr Permeat angesaugt, wodurch der Systemdruck absinkt und sowohl weniger als auch an Produktgas ärmeres Permeat aus dem Permeatausgang (1c) austritt.

Gemäß einer bevorzugten Ausführungsform der vorliegenden Erfindung ist auch vorgesehen, dass in der Offgasleitung aus dem Permeatausgang (1c) ein weiterer Verdichter (4) vorgesehen ist. Mittels eines derartigen Verdichters (4) kann, unabhängig von der Drehzahl des Verdichters (3), die Entnahme von Offgas aus dem Permeatausgang (1c) der ersten Membraneinheit (1) und damit auch der Gehalt an Produktgas im Offgas gesteuert bzw. geregelt werden.

Weiters ist günstig, wenn die leitungsmäßige Verbindung zwischen den Permeatausgängen (1d) und (2c) mit dem Verdichter (3) bzw. der in den Verdichter führenden Gaszufuhr und/oder die leitungsmäßige Verbindung zwischen dem Permeatausgang (1c) und dem Verdichter (4) jeweils ein Regelventil (5, 6) aufweisen. Durch eine solche Vorrichtung kann die Konzentration des aus dem Permeatausgang (1c) abgezogenen Offgases leicht geregelt werden, eine durch Öffnen des Regelventils (5) und/oder zumindest teilweises Schließen des Regelventils (6) bedingte verringerte Entnahme von Permeat aus dem Permeatausgang (1c) bedingt einen vermehrten Austritt von Permeat über den Permeatausgang (1d) in die leitungsmäßige Verbindung zwischen Permeatausgang (2c) der zweiten Membraneinheit (2) und dem Verdichter (3) bzw. der in den Verdichter führenden Gaszufuhr, welches Permeat dann eine andere Konzentration hat als das Permeat bei (1c), während eine vermehrte Entnahme von Permeat aus dem Permeatausgang (1c), beispielsweise durch Öffnen des Regelventils (6) und/oder zumindest teilweises Schließen des Regelventils (5), einen Übertritt von Permeat aus Permeatausgang (2c) über Permeatausgang (1d) aus der zweiten Membraneinheit (2) in die erste Membraneinheit (1) zur Folge hat. Durch eine verringerte Entnahme von Permeat aus dem Permeatausgang (1c) wird somit eine Verringerung der Konzentration an Produktgas, beispielsweise Methan, im Permeat bedingt, während eine vermehrte Entnahme von Permeat aus dem Permeatausgang (1c) eine Erhöhung der Konzentration an Produktgas, beispielsweise Methan, im Permeat zur Folge hat.

Gemäß einem weiteren Aspekt der vorliegenden Erfindung wird die genannte Vorrichtung zur Trennung eines hauptsächlich aus CH₄/CO₂ bestehenden Gasgemisches in CH₄ als Produktgas und CO₂ als Offgas eingesetzt.

Noch ein weiterer Aspekt der vorliegenden Erfindung betrifft ein Verfahren zur Regelung der Konzentration an Produktgas in einem Offgas bei Auftrennung eines Gasgemisches in Produktgas und Offgas mittels Gaspermeation, wobei das Retentat einer ersten Membraneinheit (1) als Feedgas einer zweiten Membraneinheit (2) verwendet wird, das Permeat der zweiten Membraneinheit (2) dem druckbeaufschlagten Feedgas der ersten Membraneinheit (1) beigemischt wird, das Retentat der zweiten Membraneinheit (2) als Produktgas und ein erstes Permeat der ersten Membraneinheit (1) als Offgas abgezogen wird, wobei erfindungsgemäß vorgesehen ist, dass das Permeat der zweiten Membraneinheit (2) mit einem zweiten Permeat der ersten Membraneinheit (1) vermischt und die Mischung dem Feedgas der ersten Membraneinheit (1) ansaugseitig in den Verdichter (3) bzw. in die in den Verdichter führende Gaszufuhr zugeführt wird.

Gemäß einem letzten Aspekt der vorliegenden Erfindung wird das erfindungsgemäße Verfahren zur Trennung eines hauptsächlich aus CH₄/CO₂ bestehenden Gasgemisches in CH₄ als Produktgas und CO₂ als Offgas verwendet.

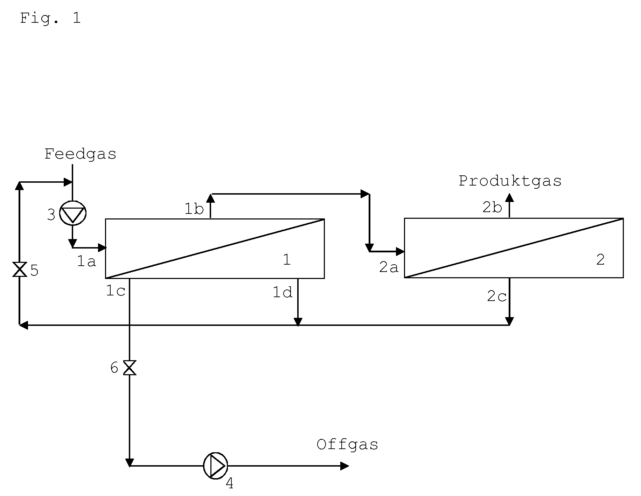

Die vorliegende Erfindung wird nun unter Bezugnahme auf die beiliegende Figur näher erklärt. Dabei zeigt
Fig. 1 ein Blockschaltbild einer erfindungsgemäßen Vorrichtung mit zwei Membraneinheiten (1) und (2) sowie einem der ersten Membraneinheit (1) vorgeschalteten Kompressor bzw. Verdichter (3).

Alle Membraneinheiten weisen einen Gaseingang (1a, 2a), einen Retentatausgang (1b, 2b) und zumindest einen Permeatausgang (1c, 1d, 2c) auf, wobei der Retentatausgang (1b) der ersten Membraneinheit (1) mit dem Gaseingang (2a) der zweiten Membraneinheit (2) verbunden ist. Da Produktgas hier als Retentat gewonnen wird, bedeutet dies, dass von der Membraneinheit (1) Produktgas zur weiteren Reinigung als Feedgas in die Membraneinheit (2) verbracht wird. In der Membraneinheit (2) anfallendes Permeat wird dann über den Permeatausgang (2c) dem Verdichter (3) bzw. der in den Verdichter führenden Gaszufuhr ansaugseitig zugeführt, sodass über Verdichter (3), Gaseingang (1a), Retentatausgang (1b), Gaseingang (2a) und Permeatausgang (2c) in der zweiten Membraneinheit (2) abgetrenntes Permeat im Kreislauf geführt wird. Diesem Permeat der zweiten Membraneinheit (2) wird nun ein Permeat der ersten Membraneinheit (1) zugemischt, welches in seiner Konzentration variabel ist und welche Konzentration über die Entnahme des Offgases der ersten Membraneinheit (1) geregelt werden kann.

Produktgas wird dabei über den Retentatausgang (2b) abgeführt, Offgas über den Permeatausgang (1c). Wenn das bei (1c) austretende Offgas eine für die weitere Verwendung, insbesondere im Falle von Biogas für die Verbrennung, zu geringe Konzentration an Produktgas (im Falle von Biogas Methan) aufweist, wird über eine vermehrte Entnahme, beispielsweise mit Hilfe des Verdichters (4), eine Erhöhung der Konzentration an Produktgas bewirkt, indem mittels des erzeugten Unterdrucks Permeat aus der zweiten Membraneinheit (2) über den Permeatausgang (2c) und den Permeatausgang (1d) in die erste Membraneinheit (1) gesaugt wird, wodurch dem Permeat der ersten Membraneinheit (1) an Produktgas reicheres Permeat der zweiten Membraneinheit (2) zugemischt wird. Andererseits bewirkt eine verminderte Entnahme des bei (1c) austretenden Offgases, beispielsweise durch Schließen des Regelventils (6) oder eine verminderte Drehzahl des Verdichters (4), einen Rückstau von an Produktgas ärmeren Permeat der ersten Membraneinheit (1), welches über den zweiten Permeatausgang (1d) der ersten Membraneinheit (1) abgeführt, mit dem Permeat der zweiten Membraneinheit (2) vermischt und ansaugseitig des Verdichters (3) zum Feedgas recycliert wird.

## Patentansprüche

1. Vorrichtung zur Regelung der Konzentration an Produktgas in einem Offgas bei Auftrennung eines Gasgemisches in Produktgas und Offgas mittels Gaspermeation mit mindestens zwei Membraneinheiten (1) und (2) und einem der ersten Membraneinheit
(1) vorgeschalteten Verdichter (3), welche Membraneinheiten (1) und (2) einen Gaseingang (1a, 2a), einen Retentatausgang (1b, 2b) und Permeatausgänge (1c, 1d und 2c) aufweisen, wobei der Retentatausgang (1b) der ersten Membraneinheit (1) mit dem Gaseingang (2a) der zweiten Membraneinheit (2), der Permeatausgang (2c) der zweiten Membraneinheit (2) ansaugseitig mit dem Verdichter (3) bzw. der in den Verdichter führenden Gaszufuhr und der Verdichter (3) mit dem Gaseingang (1a) der ersten Membraneinheit (1) leitungsmäßig verbunden ist, Produktgas über Retentatausgang (2b) und Offgas über Permeatausgang (1c) erhalten wird, **dadurch gekennzeichnet, dass** der Permeatausgang (1d) der ersten Membraneinheit (1) mit der Leitung zwischen Permeatausgang (2c) der zweiten Membraneinheit
(2) und dem Verdichter (3) bzw. der in den Verdichter führenden Gaszufuhr leitungsmäßig verbunden ist und der Verdichter (3), welcher der ersten Membraneinheit (1) vorgeschaltet ist, hinsichtlich seiner Drehzahl regelbar ist.

2. Vorrichtung nach Anspruch 1, **dadurch gekennzeichnet, dass** in der Offgasleitung aus dem Permeatausgang (1c) ein weiterer Verdichter (4) vorgesehen ist.

3. Vorrichtung nach Anspruch 1 oder 2, **dadurch gekennzeichnet, dass** die leitungsmäßige Verbindung zwischen den Permeatausgängen 1d und 2c mit dem Verdichter (3) bzw. der in den Verdichter führenden Gaszufuhr und/oder die leitungsmäßige Verbindung zwischen dem Permeatausgang 1c und dem Verdichter (4) jeweils ein Regelventil (5, 6) aufweisen.

4. Vorrichtung nach einem der Ansprüche 1 bis 3 zur Trennung eines CH₄/CO₂ enthaltenden Gasgemisches in CH₄ als Produktgas und CO₂ als Offgas.

5. Verfahren zur Regelung der Konzentration an Produktgas in einem Offgas bei Auftrennung eines Gasgemisches in Produktgas und Offgas mittels Gaspermeation, wobei das Retentat einer ersten Membraneinheit (1) als Feedgas einer zweiten Membraneinheit (2) verwendet wird, das Permeat der zweiten Membraneinheit (2) dem druckbeaufschlagten Feedgas der ersten Membraneinheit (1) beigemischt wird, das Retentat der zweiten Membraneinheit (2) als Produktgas und ein erstes Permeat der ersten Membraneinheit (1) als Offgas abgezogen wird, **dadurch gekennzeichnet, dass** das Permeat der zweiten Membraneinheit (2) mit einem zweiten Permeat der ersten Membraneinheit (1) vermischt und die Mischung dem Feedgas der ersten Membraneinheit (1) ansaugseitig in den Verdichter (3) bzw. in die in den Verdichter führende Gaszufuhr zugeführt wird.

6. Verfahren nach Anspruch 5 zur Trennung eines CH₄/CO₂ enthaltenden Gasgemisches in CH₄ als Produktgas und CO₂ als Offgas.

## Claims

1. A device for controlling the concentration of a product gas present in an off-gas when separating a gas mixture into a product gas and an off-gas by means of gas permeation, said device having at least two membrane units (1) and (2) and a compressor (3) which is arranged upstream of the first membrane unit (1), wherein each of the membrane units (1) and (2) has a gas inlet (1a, 2a), a retentate outlet (1b, 2b) and permeate outlets (1c, 1d, and 2c), wherein the retentate outlet (1b) of the first membrane unit (1) is connected to the gas inlet (2a) of the second membrane unit (2), the permeate outlet (2c) of the second membrane unit (2) is connected to the inlet side of the compressor (3) or of the gas supply leading into the compressor (3), and the compressor (3) is connected to the gas inlet (1a) of the first membrane unit (1) via a conduit, wherein the product gas is obtained via the retentate outlet (2b) and the off-gas is obtained via the permeate outlet (1c), **characterized in that** the permeate outlet (1d) of the first membrane unit (1) is connected to the conduit arranged between the permeate outlet (2c) of the second membrane unit (2) and the compressor (3) or the gas supply leading into the compressor (3) via a conduit and **in that** the rotational speed of the compressor (3), which is arranged upstream of the first membrane unit (1), can be controlled.

2. Device according to claim 1, **characterized in that** another compressor (4) is provided in the off-gas conduit leading from the permeate outlet (1c) .

3. Device according to claim 1 or 2, **characterized in that** the conduit connection between the permeate outlets (1d) and (2c) and the compressor (3) or the gas supply leading into the compressor (3) and/or the conduit connection between the permeate outlet (1c) and the compressor (4) each have a control valve (5, 6).

4. Device according to any one of claims 1 to 3 for separating a gas mixture containing CH₄/CO₂ into CH₄ as a product gas and CO₂ as an off-gas.

5. Method for controlling the concentration of a product gas present in an off-gas when separating a gas mixture into a product gas and an off-gas by means of gas permeation, wherein the retentate of a first membrane unit (1) is used as a feed gas of a second membrane unit (2), the permeate of the second membrane unit (2) is admixed with the pressurized feed gas of the first membrane unit (1), the retentate of the second membrane unit (2) is distilled as a product gas, and a first permeate of the first membrane unit (1) is distilled as an off-gas, **characterized in that** the permeate of the second membrane unit (2) is admixed with a second permeate of the first membrane unit (1) and the resulting mixture is supplied to the feed gas of the first membrane unit (1) at the inlet side of the compressor (3) or of the gas supply leading into the compressor (3).

6. Method according to claim 5 for separating a gas mixture containing CH₄/CO₂ into CH₄ as a product gas and CO₂ as an off-gas.

## Revendications

1. Dispositif de régulation de la concentration de gaz de production dans un gaz de rejet lors de la séparation d'un mélange de gaz en gaz de production et gaz de rejet au moins d'une perméation de gaz avec au moins deux unités de membranes (1) et (2) et un compresseur (3) branché en amont de la première unité de membrane (1), ces unités de membranes (1) et (2) comprenant une entrée de gaz (1a, 2a), une sortie de rétentat (1b, 2b) et des sorties de perméat (1c 1d et 2c), la sortie de rétentat (1b) de la première unité de membrane (1) étant reliée avec l'entrée de gaz (2a) de la deuxième unité de membrane (2), la sortie de perméat (2c) de la deuxième unité de membrane (2) étant reliée, côté aspiration, avec le compresseur (3) ou l'alimentation en gaz conduisant dans le compresseur et le compresseur (3) étant relié, à l'aide conduite, avec l'entrée de gaz (1a) de la première unité de membrane (1), du gaz de production étant obtenu au niveau de la sortie de rétentat (2b) et du gaz de rejet étant obtenu au niveau de la sortie de perméat (1c), **caractérisé en ce que** la sortie de perméat (1d) de la première unité de membrane (1) est reliée avec la conduite entre la sortie de perméat (2c) de la deuxième unité de membrane (2) et le compresseur (3) ou l'alimentation en gaz conduisant dans le compresseur et le compresseur (3), qui est branché en amont de la première unité de membrane (1), peut être régulé en ce qui concerne sa vitesse de rotation.

2. Dispositif selon la revendication 1, **caractérisé en ce que**, dans la conduite de gaz de rejet provenant de la sortie de perméat (1c), se trouve un compresseur supplémentaire (4).

3. Dispositif selon la revendication 1 ou 2, **caractérisé en ce que** la liaison, à l'aide d'une conduite, entre les sorties de perméat 1d et 2c avec le compresseur (3) ou l'alimentation en gaz conduisant dans le compresseur et/ou la liaison à l'aide d'une conduite entre la sortie de perméat 1c et le compresseur (4) présentent chacune une soupape de régulation (5, 6).

4. Dispositif selon l'une des revendications 1 à 3, pour la séparation d'un mélange de gaz contenant du CH₄/CO₂ en CH₄ en tant que gaz de production et CO₂ en tant que gaz de rejet.

5. Procédé de régulation de la concentration de gaz de production dans un gaz de rejet lors de la séparation d'un mélange de gaz en gaz de production et en gaz de rejet au moyen d'une perméation de gaz, le rétentat d'une première unité de membrane (1) étant utilisé en tant que gaz d'alimentation d'une deuxième unité de membrane (2), le perméat de la deuxième unité de membrane (2) étant ajouté au gaz d'alimentation pressurisé de la première unité de membrane (1), le rétentat de la deuxième unité de membrane (2) étant extrait en tant que gaz de production et un premier perméat de la première unité de membrane (1) étant évacué en tant que gaz de rejet, **caractérisé en ce que** le perméat de la deuxième unité de membrane (2) est mélangée avec un deuxième perméat de la première unité de membrane (1) et le mélange est ajouté au gaz d'alimentation de la première unité de membrane (1), côté aspiration, dans le compresseur (3) ou dans l'alimentation en gaz conduisant vers le compresseur.

6. Procédé selon la revendication 5 pour la séparation d'un mélange de gaz contenant du CH₄/CO₂ en CH₄ en tant que gaz de production et en CO₂ en tant que gaz de rejet.
